# EUROPEAN PATENT SPECIFICATION

(11) **EP 1 982 222 B1**
(45) Date of publication and mention of the grant of the patent: **06.06.2012**
(21) Application number: 06757797.3
(22) Date of filing: 13.06.2006
(51) Int. Cl.: G02B 6/44

(54) **OPTICAL FIBER CABLE SUITED FOR BLOWN INSTALLATION OR PUSHING INSTALLATION IN MICRODUCTS OF SMALL DIAMETER**
FÜR BLASINSTALLATION ODER SCHIEBEINSTALLATION IN MIKRODURCHGÄNGEN MIT KLEINEM DURCHMESSER GEEIGNETES FASEROPTISCHES KABEL
CABLE A FIBRES OPTIQUES SUSCEPTIBLE D'ETRE INSTALLE DANS DES MICROCONDUITS DE PETIT DIAMETRE PAR CIRCULATION D'AIR OU ENFONCEMENT

(30) Priority: 08.02.2006 NL 1031109
(43) Date of publication of application: 22.10.2008
(73) Proprietor: Draka Comteq B.V., 1021 JZ Amsterdam (NL)
(72) Inventor: WEISS, Alexander, 41179 Mönchengladbach (DE); NOTHOFER, Klaus, 40699 Erkrath (DE); LAUSCH, Peter, 47803 Krefeld (DE)
(74) Representative: op den Brouw-Sprakel, Vera Stefanie Irene
(86) International application number: PCT/NL2006/000290
(87) International publication number: WO 2007/091880

(56) References cited:
- EP-A2- 1 369 724
- US-A- 5 082 348
- US-A1- 2005 281 517

## Description

The invention relates to the field of optical fiber cables and more specifically to an optical fiber cable especially suited for blown installation or pushing installation in microducts of small diameter.

Fiber optic cables have been commonly deployed by installing them in ducts either by blowing or pulling, burying them in the ground, or suspending them between above-ground poles. Traditional duct installation is inefficient in utilizing space tough, typically one cable per inner duct has been the maximum capacity, and in some cases two cables have been pulled- or jetted-in. Recently developed optical micro cabling technology has been introduced for the deployment of fiber optic cables to increase utilization of the conduit space and enhance profitability of the current or future telecommunications infrastructure. This technology involves the use of standard inner ducts in which microducts are jetted, then followed by the jetting of microduct cables or microcables into the microducts when required. Although originally intended for business access networks (FTTB) and fiber-to-the-home (FTTH), it has been used successfully in long-haul applications as well.

Microducts are empty tubes of small outer/inner diameter, generally in the range of 5/3.5 mm - 12/10 mm which can be blown or pushed into empty or partially filled standard ducts. Microduct cables or microcables, specially designed for this kind of applications are then installed, when and as needed, inside said microduct tubes by means of blown installation techniques.

There are a variety of microduct cables on the market with variable external diameters suited for different microduct inner diameter dimensions and holding a plurality of optical fibers inside. In US Pat. 2002/0061231, for example, a microcable comprising a metal or plastic tube of very small diameter (preferably 3.5 to 5.5 mm) coated with a plastic layer e.g. PTFE, is described. The optical waveguides are then introduced into the tube either after the empty tube has been laid or at the factory.

GB 1,529,101 relates to an optical conductor for use in an optical cable, comprising a light transmission element in the form of a glass fibre or glass fibre bundle and a protective sheath surrounding said fibre or bundle, wherein said protective sheath is composed of two layers of different synthetic resin materials, an inner layer consisting of polystyrene, or a fluorinated polymer, which will slide freely on the glass fibre or fibres, and an outer layer consisting of a polyamide, a polyterephthalate, polypropylene, or polyethylene.

U.S. No. 6,334,015 relates to a telecommunication cable having optical fibers contained in a retaining sheath, wherein the retaining sheath tightly grips a predetermined number N of optical fibers, for example four, six, eight or twelve fibers to hold the optical fibers in a group and thereby constitute a compact module. A plurality of optical fiber modules can be combined within a protective jacket of a telecommunication cable or can be retained in a cylindrical sheath to form a bundle of several modules, with or without a central reinforcing member, which bundle is combined with other bundles of modules in a protective jacket of a telecommunication cable, which cable is not be regarded as a microcable.

U.S. No. 6,137,935 relates to an optical cable comprising at least one optical fiber surrounded by a tubular sheath, wherein an inner layer and an outer layer of the tubular sheath are extruded together around the optical fiber in a single operating step. The tubular sheath is formed by an inner layer made of plastic, followed by a directly superimposed outer layer which is also made of plastic; both layers are extruded in a common operating step. Tension elements which extend in the longitudinal direction of the optical cable, are embedded in the tubular sheath in the region between the inner layer and the outer layer.

WO 2005/019894 relates to an optical transmission cable suitable for push/pull installation in a microtube comprising an outer sheath which surrounds at least one optical fibre. The aforementioned outer sheath is made from a material blend of multiple thermoplastics having a modulus of elasticity of between 1000 and 2500 MPa under normal use conditions, a thermal expansion coefficient of less than 1.10⁴/°C and a post shrinkage coefficient of less than 0.1%.

Another known steel tube designs used by a micro technology optical fiber deployment company allow up to 72 fibers in a small 5.5 mm package and fits into a 10/8 mm microproduct. There exist also the so-called blown fiber bundles or fiber ribbons consisting of fiber bundles which are embedded in a common soft matrix material. The latter though are no real cables, and are not suited for outside plant applications as they are not suited for outside plant applications as they are not robust and thus sensitive to mechanical damage when installed in outdoor environment.

U.S. No. 2005/0281517 relates to an optical fibre cable comprising a buffer tube including inner and outer layers formed of a first and second, different polymeric material. These cables are used as an integral part of a larger stranded loose tube cable or a central tube cable, the larger cables comprising axially extending strength members.

EP 1369724 relates to a small cable with a buffer tube made of a material comprising inorganic fillers dispersed within a soft resin. The cable is sufficiently flexible to allow it to be air blown.

The object of the present invention is to develop a microcable suitable for blown installation in small microducts. The cable shall allow high fiber count, blowing performance and be mechanically robust enough to be safely installed in an outside plant environment.

This object is achieved according to the invention by a microcable for installation in small microducts which comprises a protective sheath holding a plurality optical fibers, wherein said protective sheath is composed of two layers of different synthetic materials, characterised in that the inner layer of said protective sheath consists of a material having an elasticity modulus in the range of 1500-10,000 MPa at room temperature, and that the outer layer of said protective sheath consists of a material having an elasticity modulus in the range of 600-1200 MPa at room temperature.

Advantageous configurations of the invention emerge from the dependent claims, the following description and the drawings.

A cable of the characteristics described in the present invention also complies with all major outdoor cable requirements: not sensitive to mechanical damage, high tensile strength, crush resistance and able to work in an operation temperature range from -30 °C to +60 °C. Another advantage is that it is easy to handle by normal skilled installation personnel.

The microcable according to the present invention is made of a combination of buffer tube and sheath materials which are processed in a way which provides a tight coupling of buffer tube and sheath, and at the same time allow for easy removal of the sheath. The design of the present microcable is such that the microcable is stiff enough to allow long pushing distances without air drag support and is flexible enough to provide long distance blowing installation in curved ducts. In addition, the microcable according to the present invention has a low thermal expansion coefficient and shrink back to allow a wide operating temperature range.

In a preferred embodiment of the microcable according to the present invention the microcable has a post extrusion shrinkage of less than 0.3% and a thermal expansion coefficient of less than 1.5 x 10⁻⁴/K.

The material for the inner layer is selected from the group of polybutylene terephthalate (PBT), polyethylene terephthalate (PET), polyamide 6 (PA 6), polyamide 12 (PA 12) and polycarbonate (PC), or blends thereof. The material of the outer layer of the protective sheath is selected from the group of high density polyethylene (HDPE) and polypropylene (PP), or blends thereof. If necessary, reinforcement additives can be added to both the material of the inner layer and/or the material of the outer layer, wherein the reinforcement additives are selected from the group of glass or plastic fibers, glass beads, carbon fibers and mineral additives, or mixtures thereof.

The material of the inner layer is made preferably of PA12, and the outer layer is made preferably of HDPE. Such a hard inner layer, e.g. of PA12, provides an extremely smooth inner surface which avoids microbendings in the optical fibers. Due to the double jacket design, the post shrinkage and the thermal expansion coefficient of the microcable can be adjusted in a wide range by selection of material combination and dimensions for inner and outer layer. When the microcable according to the present invention is made on a double extrusion line, the manufacturing costs are extremely low. Furthermore, the adhesion of the inner and outer layers is in an ideal range for easy stripping and high enough strength to withstand abrasion. Due to the process, the microcable according to the present invention provides a very small diameter variation and constant geometry of the length resulting in reduced friction.

The fiber density, i.e. the cross section of fibers in the cable divided by the cross section of the cable, of the cable is preferably in a range between 0.1 and 0.2. A higher density, i.e. a value of < 0.2, limits the operation temperature range.

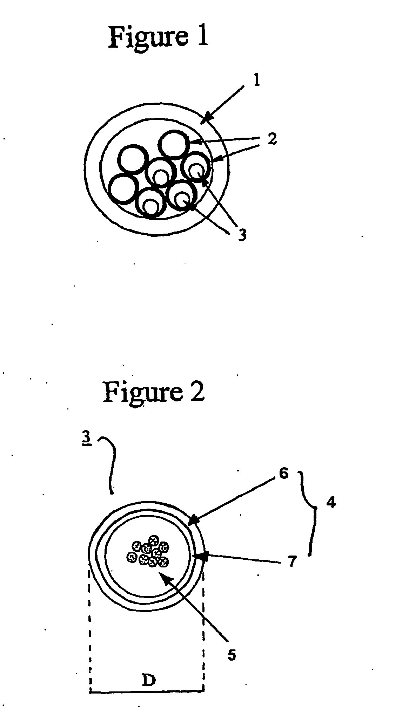

An embodiment of the invention is now explained with the aid of Figures 1 and 2.
Fig. 1 shows a cross-sectional view of an optical micro cabling deployment example.
Fig. 2 shows a cross-sectional view of a microcable according to the invention.
Figure 1 shows an example of the micro cabling technology for the deployment of optical fiber cables. The configuration in the figure shows a duct 1 in which seven microducts 2 have been placed and four of said microducts have a microcable 3 inside.
Figure 2 shows a microcable 3 according to the invention. It comprises a single buffer tube 4 holding a plurality of optical fibers 5, wherein said buffer tube or protective sheath is composed of two layers of different synthetic materials, i.e. an inner layer 7 and an outer layer 6.

The buffer tube 4 is generally filled with a water repelling gel. It has a relative big diameter in comparison to a whole cable cross-section, which allows it to house a high optical fiber 5 count.

The microcable according to the present invention is suitable for blowing and/or pushing installation into small microducts having an inner diameter of 3.5 mm or 5.5 mm. The cable diameter and weight of the present microcable must be as small as possible and it shall contain up to minimal 12 fibers or 24 fibers, respectively. This is specifically supported by the absence of an extra layer of strength members between the sheath layers, i.e. inner layer 6 and outer layer 7.

The optical fibers 5 used are preferably standard singlemode or multimode optical fibers with a nominal diameter of 200-250 µm,

A microcable 3 designed according to the invention presents the advantages that it allows to obtain a cable with an extremely small outer diameter D specially suited for installation in small microducts 2, and is flexible enough to be easily blown in microducts in outside cable plants. It further allows operation at low temperatures and provides high protection of the fibers against mechanical damage, microbending and water.

## Claims

1. The use of a microcable (3) comprising a protective sheath (4) holding a plurality of optical fibers (5), wherein said protective sheath (4) is composed of two layers of different synthetic materials (6, 7), the inner layer (7) of said protective sheath (4) consists of a material having an elasticity modulus in a range of 1600-3000 MPa at room temperature, and the outer layer (6) of said protective sheath (4) consists of a material having an elasticity modulus In the range of 800-1200 MPa at room temperature for installation in small microducts by pushing and/or air blowing.

2. The use of claim 1, **characterised In that** the post shrinkage of said microcable is less than 0.3%.

3. The use according to anyone of the preceding claims, **characterised in that** the thermal expansion coefficient is less than 1.5 x 10⁻⁴/K.

4. The use according to anyone of the preceding claims, **characterised in that**, said the area between the optical fibers (5) and the Inner layer (7) of said protective sheath (4) is filled with a water blocking gel.

5. The use according to anyone of the preceding claims, **characterised In that** said inner layer (7) is selected from the group of PBT, PET, PA 8, PA 12 and PC, or blends thereof.

6. The use according to anyone of the claims 1-4, charecterised In that said outer layer (8) is selected from the group of HOPE and PP, or blends thereof.

7. The use according to anyone of the preceding claims, **characterised In that** reinforcement additives are embedded In the Inner layer (7) and/or outer layer (6).

8. The use according to claim 7, **characterised In that** said reinforcement additives are selected from the group of glass fibers, glass beads, carbon fibers and mineral additives, or mixtures thereof.

9. The use according to anyone of the preceding claims **characterised in that** no continuous axially extending high tensile strength members are embedded In the Inner layer (7), outer layer (6), and/or between the inner and outer layer (6, 7).

10. according to anyone of the preceding claims, **characterised in that** the fiber density of said microcable (3) is In a range between 0.1 and 0.2

11. The use according to anyone of the preceding claims, **characterised in that** the fiber density of said microcable (3) is in a range between 0.1 and 0.2, the microcable has a fiber count of ≤ 24, at an outer diameter of said microcable (3) between 1.6 and 3.2 mm.

12. The use according to anyone of the preceding claims, **characterised in that** the wall thickness, defined by the ratio between outer and Inner diameter of the protective sheath (4) is in the range of 1.6 to 2.0.

## Patentansprüche

1. Verwendung eines Mikrokabels (3), das eine Schutzhülle (4) aufweist, welche eine Vielzahl von optischen Fasern (5) aufnimmt, wobei die Schutzhülle (4) aus zwei Schichten (6, 7) unterschiedlicher Kunststoffe zusammengesetzt ist, die Innenschicht (7) der Schutzhülle (4) aus einem Material mit einem Elastizitätsmodul in einem Bereich von 1500 bis 3000 MPa bei Raumtemperatur besteht, und die Außenschicht (6) der Schutzhülle (4) aus einem Material mit einem Elastizitätsmodul im Bereich von 600 bis 1200 MPa bei Raumtemperatur besteht, zum Einsetzen in kleine Mikrokanäle durch Einschieben und/oder Lufteinblasung.

2. Verwendung nach Anspruch 1, **dadurch gekennzeichnet, dass** die Nachschrumpfung des Mikrokabels unter 0,3% liegt.

3. Verwendung nach einem der vorhergehenden Ansprüche, **dadurch gekennzeichnet, dass** der Wärmeausdehnungskoeffizient unter 1,5 x 10⁻⁴/K liegt.

4. Verwendung nach einem der vorhergehenden Ansprüche, **dadurch gekennzeichnet, dass** der Bereich zwischen den optischen Fasern (5) und der Innenschicht (7) der Schutzhülle (4) mit einem wasserblockierenden Gel gefüllt ist.

5. Verwendung nach einem der vorhergehenden Ansprüche, **dadurch gekennzeichnet, dass** die Innenschicht (7) aus der aus PBT, PET, PA6, PA12 und PC oder Mischungen hiervon bestehenden Gruppe ausgewählt ist.

6. Verwendung nach einem der Ansprüche 1 bis 4, **dadurch gekennzeichnet, dass** die Außenschicht (6) aus der aus HDPE und PP oder Mischungen hiervon bestehenden Gruppe ausgewählt ist.

7. Verwendung nach einem der vorhergehenden Ansprüche, **dadurch gekennzeichnet, dass** in die Innenschicht (7) und/oder die Außenschicht (6) Verstärkungsadditive eingebettet sind.

8. Verwendung nach Anspruch 7, **dadurch gekennzeichnet, dass** die Verstärkungsadditive aus der aus Glasfasern, Glaskügelchen, Kohlefasern und Mineralzusätzen oder Mischungen hiervon bestehenden Gruppe ausgewählt sind.

9. Verwendung nach einem der vorhergehenden Ansprüche, **dadurch gekennzeichnet, dass** keine durchgehenden, axial verlaufenden hochzugfesten Verstärkungselemente in die Innenschicht (7), Außenschicht (6) und/oder zwischen der Innen- und Außenschicht (7, 6) eingebettet sind.

10. Verwendung nach einem der vorhergehenden Ansprüche, **dadurch gekennzeichnet, dass** die Faserdichte des Mikrokabels (3) in einem Bereich zwischen 0,1 und 0,2 liegt.

11. Verwendung nach einem der vorhergehenden Ansprüche, **dadurch gekennzeichnet, dass** die Faserdichte des Mikrokabels (3) in einem Bereich zwischen 0,1 und 0,2 liegt und das Mikrokabel eine Faseranzahl ≤ 24 bei einem Außendurchmesser des Mikrokabels (3) zwischen 1,5 und 3,2 mm hat.

12. Verwendung nach einem der vorhergehenden Ansprüche, **dadurch gekennzeichnet, dass** die Wanddicke, definiert durch das Verhältnis zwischen dem Außen- und Innendurchmesser der Schutzhülle (4), im Bereich zwischen 1,5 und 2,0 liegt.

## Revendications

1. Utilisation d'un micro-câble (3) comprenant une gaine de protection (4) maintenant une pluralité de fibres optiques (5), dans laquelle ladite gaine de protection (4) est composée de deux couches de matériaux synthétiques différents (6, 7), la couche interne (7) de ladite gaine de protection (4) est constituée d'un matériau ayant un module d'élasticité dans la gamme de 1500 à 3000 MPa à température ambiante, et la couche externe (6) de ladite gaine de protection (4) est constituée d'un matériau ayant un module d'élasticité dans la gamme de 600 à 1200 MPa à température ambiante pour une installation dans des petits micro-conduits en poussant et/ou en soufflant de l'air.

2. Utilisation selon la revendication 1, **caractérisée en ce que** le post-retrait dudit micro-câble est inférieur à 0,3 %.

3. Utilisation selon l'une quelconque des revendications précédentes, **caractérisée en ce que** le coefficient de dilatation thermique est inférieur à 1,5 x 10⁻⁴/K.

4. Utilisation selon l'une quelconque des revendications précédentes, **caractérisée en ce que** la zone entre les fibres optiques (5) et la couche interne (7) de ladite gaine de protection (4) est remplie d'un gel bloquant l'eau.

5. Utilisation selon l'une quelconque des revendications précédentes, **caractérisée en ce que** ladite couche interne (7) est choisie parmi le groupe constitué de PBT, PET, PA 6, PA 12 et PC, ou leurs mélanges.

6. Utilisation selon l'une quelconque des revendications 1 à 4, **caractérisée en ce que** ladite couche externe (6) est choisie parmi le groupe constitué de HDPE et PP, ou leurs mélanges.

7. Utilisation selon l'une quelconque des revendications précédentes, **caractérisée en ce que** les additifs renforçateurs sont incorporés dans la couche interne (7) et/ou la couche externe (6).

8. Utilisation selon la revendication 7, **caractérisée en ce que** lesdits additifs renforçateurs sont choisis parmi le groupe constitué des fibres de verre, des billes de verre, des fibres de carbone et des additifs minéraux, ou leurs mélanges.

9. Utilisation selon l'une quelconque des revendications précédentes, **caractérisée en ce qu'**aucun organe de haute résistance à la traction s'étendant axialement en continu n'est incorporé dans la couche interne (7), la couche externe (6) et/ou entre la couche interne et la couche externe (6,7).

10. Utilisation selon l'une quelconque des revendications précédentes, **caractérisée en ce que** la densité de fibre dudit micro-câble (3) se situe dans une gamme entre 0,1 et 0,2.

11. Utilisation selon l'une quelconque des revendications précédentes, **caractérisée en ce que** la densité de fibre dudit micro-câble (3) se situe dans une gamme entre 0,1 et 0,2, le micro-câble présente un compte de fibres ≤ 24 au niveau d'un diamètre externe dudit micro-câble (3) entre 1,5 et 3,2 mm.

12. Utilisation selon l'une quelconque des revendications précédentes, **caractérisée en ce que** l'épaisseur de paroi, définie par le rapport entre les diamètres interne et externe de la gaine de protection (4), se situe dans la gamme de 1,5 à 2,0.
